# EUROPEAN PATENT SPECIFICATION

(11) **EP 1 901 235 B1**
(45) Date of publication and mention of the grant of the patent: **14.08.2019**
(21) Application number: 06019396.8
(22) Date of filing: 15.09.2006
(51) Int. Cl.: G06T 19/20, G01P 5/00

(54) **Free style deformation (FSD)**
Freistildeformation (FSD)
Déformation de style libre (FSD)

(43) Date of publication of application: 19.03.2008
(73) Proprietor: Honda Research Institute Europe GmbH, 63073 Offenbach/Main (DE)
(72) Inventor: Sendhoff, Dr. Bernhard, 63486 Bruchköbel (DE); Olhofer, Dr. Markus, 63500 Seligenstadt (DE); Menzel, Dr. Stefan, 63303 Dreieich-Sprendlingen (DE)
(74) Representative: Rupp, Christian

(56) References cited:
- YAMADA R ET AL: "A method of kANSEI acquisition to 3D shape design and its application" ROBOT AND HUMAN INTERACTION, 1999. RO-MAN '99. 8TH IEEE INTERNATIONAL WORKSHOP ON PISA, ITALY 27-29 SEPT. 1999, PISCATAWAY, NJ, USA,IEEE, US, 27 September 1999 (1999-09-27), pages 369-374, XP010530482 ISBN: 0-7803-5841-4
- VAN DEN BERG E ET AL: "Freeform feature modelling: concepts and prospects" COMPUTERS IN INDUSTRY, ELSEVIER SCIENCE PUBLISHERS. AMSTERDAM, NL, vol. 49, no. 2, October 2002 (2002-10), pages 217-233, XP004387771 ISSN: 0166-3615
- SCHEIN S ET AL: "Discontinuous free form deformations" COMPUTER GRAPHICS AND APPLICATIONS, 2004. PG 2004. PROCEEDINGS. 12TH PACIFIC CONFERENCE ON SEOUL, KOREA 6-8 OCT. 2004, PISCATAWAY, NJ, USA,IEEE, 6 October 2004 (2004-10-06), pages 227-236, XP010735044 ISBN: 0-7695-2234-3
- NOBLE R A ET AL: "Direct manipulation of surfaces using NURBS-based free-form deformations" INFORMATION VISUALIZATION, 1999. PROCEEDINGS. 1999 IEEE INTERNATIONAL CONFERENCE ON LONDON, UK 14-16 JULY 1999, LOS ALAMITOS, CA, USA,IEEE COMPUT. SOC, US, 14 July 1999 (1999-07-14), pages 238-243, XP010345973 ISBN: 0-7695-0210-5
- BIDARRA R ET AL: "Semantic feature modelling" COMPUTER AIDED DESIGN, ELSEVIER PUBLISHERS BV., BARKING, GB, vol. 32, no. 3, March 2000 (2000-03), pages 201-225, XP004189954 ISSN: 0010-4485
- VERGEEST J ET AL: "Free-form surface copy and paste techniques for shape synthesis", PROCEEDINGS OF INTERNATIONAL SYMPOSIUM ON TOOLS AND METHODS OFCOMPETITIVE ENGINEERING, XX, XX, 1 January 2000 (2000-01-01), pages 1-12, XP002215663,

## Description

The present invention relates to the deformation of objects using an extension of the technique of free-form deformation (FFD), which can be applied e.g. in the field of computer graphics or for the optimization of real-world designs.

### TECHNICAL BACKGROUND AND STATE OF THE ART

Free Form Deformation (FFD) techniques have been introduced in the field of computer graphics and computer animation for object manipulation. They have been applied to shape optimisation of aerodynamic objects and together with evolutionary algorithms. It has been shown that FFD methods realize a good trade-off between shape flexibility and a low number of parameter, which in turn results in a low dimensional search space for the optimisation. Furthermore, it has been demonstrated that the shape deformations defined by the FFD method can equally well be applied to deform a grid for computational fluid dynamics calculations. This way it is possible to omit the manual grid generation even for complex geometries. In many cases, design optimisation of complex shapes only becomes feasible when FFD methods are used for the representation. In the FFD method, deformations of an initial design are described instead of the geometry itself. Therefore, the number of parameters is independent of the complexity of the shape. It is solely determined by the required flexibility of the deformation.

A FFD system is generally defined by a lattice of control points. A modification of the control point positions results in a deformation of the geometry inside the control volume. For the optimisation, it is important to minimize the number of parameters. This is achieved by a proper initialisation of the control volume because the number and position of control points determines the shape flexibility.

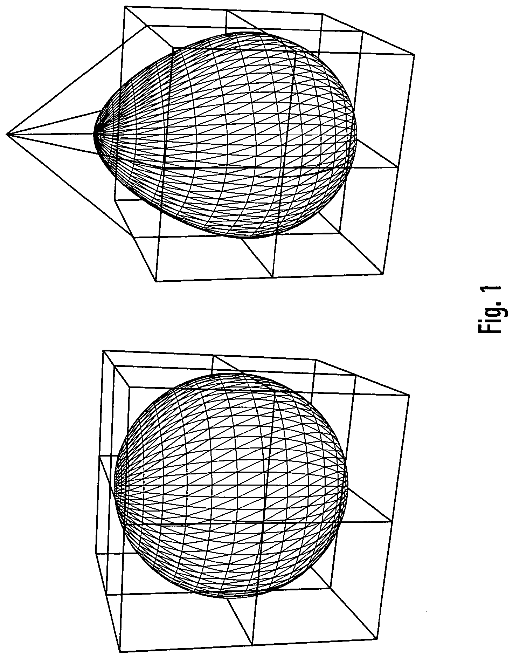

The basic idea of the free form deformation is depicted in **Figure 1**. The sphere represents the object, which is the target of the optimisation. It is embedded in a lattice of control points (CP). First, the coordinates of the object have to be mapped to the coordinates in the spline parameter space, a procedure, which is called 'freezing'. If the object is a surface point cloud of the design or a mesh, which originates from an aerodynamic computer simulation each grid point has to be converted into spline parameter space to allow the deformations. For this calculation, various methods have been proposed, e.g. Newton approximation or similar gradient based method [5, 6]. After freezing the object can be modified by moving a control point to a new position.

The new control point positions are the inputs for the spline equations and the updated geometry is calculated. Since everything in the control volume is deformed, a grid from computational fluid dynamics that is attached to the shape is also adapted. Hence, the deformation affects not only the shape of the design but at the same time, the grid points of the computational mesh which is needed for the Computational Fluid Dynamics (CFD) evaluations of the proposed designs. The new shape and the corresponding CFD mesh are generated at the same time without the need for an automated or manual re-meshing procedure. This feature significantly reduces the computational costs and allows a high degree of automation. Thus, by applying FFD the grid point coordinates are changed but the grid structure is kept.

One main disadvantage is the sensitivity of the FFD method to the initial placement of the control points. An inappropriate set-up increases the necessary size of the parameter set and therefore the dimensionality of the search space. One of the reasons is for example that the influence of a control point on an object decreases with the distance from the object. Even a small object variation requires a large modification of the control point if the initial distance between object and control point is large (this also violates the strong causality condition that is important in particular for Evolution Strategies). This in turn often modifies other areas of the design space, which has to be compensated for by the movement of other control points. Hence, often correlated mutations of control points are necessary for a local change of the object geometry.

To reduce the influence of the initial positions of the control points, direct manipulation is introduced as a representation, which allows to determine variations directly on the shape. Therefore, local deformations of the object depend only on the so called object point.

Direct manipulation of free form deformations (DFFD) is an extension to the standard FFD. Instead of moving control points (CP), whose influence on the shape is not always intuitive, the designer is encouraged to modify the shape directly by specifying so called object points (OP).

Although the initial setup of the control volume is similar to FFD, the control volume becomes invisible to the user and necessary correlated modifications are calculated analytically. In a first step, a lattice of control points has to be constructed and the coordinates of the object and the CFD mesh have to be frozen. But the control volume can be arbitrary, i.e., the number and positions of control points do not need to have any logical relationship to the embedded object, besides the fact that the number of control points determines the degree of freedom for the modification. In the next step, the designer specifies object points, which define handles to the represented object that can be repositioned. The shape is modified by directly changing the positions of these object points. The control points are determined analytically so that the shape variations (induced by the object point variations) are realized by the deformations associated with the new control point positions. In other words, the control points are calculated in such a way that the object points meet the given new positions under the constraint of minimal movement of the control points in a least square sense. Of course the object variations must be realizable by the deformations from the calculated new control point positions, i.e., if the number of control points is too small, some variations given by new object point positions might not be representable by a deformation.

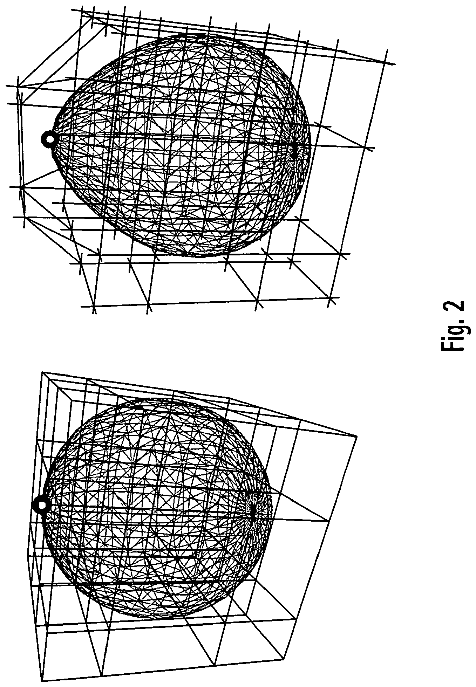

In **Figure 2** an object point has been specified at the top of the sphere. The designer is able to move this object point upwards without any knowledge of the "underlying" control volume, which can be initialized arbitrarily. The direct manipulation algorithm calculates the corresponding positions of the control points to mimic the targeted object point movement. The solution is shown in **Figure 2****.** The object point is chosen directly on the surface and the required movements of the control points to realize the target movement of the object point are calculated e.g. by the least squares method. The dotted control volume is invisible to the designer as s/he works directly on the object points; the control volume may be chosen arbitrarily.

Direct manipulation of free form deformation has several advantages when combined with evolutionary optimization as compared to standard FFD. The construction of the control volume and the number and distribution of control points are not as important as in standard FFD. Furthermore, the number of optimisation parameters equals the number of object points.

Publication "A method of KANSEI acquisition to 3D shape design and its application" by Yamada R. et al, 8th IEEE International Workshop on Robot and Human Interaction, 1999, Pisa, Italy, September 27-29, 1999, Piscataway, pages 369-374; ISBN:0-7803-5841-4 discloses a method of KANSEI acquisition to 3D shape. The proposed method bases on 3Dshape deformation and machine learning techniques, and models a relationship between 3D shape and KANSEI about them. As a design example, a sofa is chosen and the method is tested performing an example.

The publication "Free-form surface copy and paste techniques for shape synthesis" by Vergeest er al., Proceedings of 3rd International Symposium on Tools and Methods of Competitive Engineering, April 2000, pages 1-12; ISBN 920-407-1983-7 explores the benefits of design model reuse by reverse engineering. Particularly, opportunities of an incorporation of shape portions of existing products into a design model are examined. The publication presents a methodology for effective shape copy and paste functionality supporting a conceptual shaped design. The proposed method bases on microscopic matching of parameterized free-form feature templates to sampled data. The data may originate from a 3D scanning of physical parts. The template parameters are divided into real feature parameters, for example those parameters that the designer processes as modelling variables on the one hand and circumstantial parameters on the other hand, that control an underlying mechanism to translate, rotate, scale and merge the source feature onto the destination shape. By giving the designer control over the first category of parameters, the feature extraction and reuse process becomes feasible.

There are mainly two typical problems while dealing with FFD.

First, by FFD it is only possible to deform a design which has to be given initially, i.e. the possible shape modifications are limited by the design which was initially chosen to be deformed. Conceptual or structural changes are very difficult to achieve. E.g. the introduction of holes or edges is not possible or requires a huge modification of the control points.

Additionally, this process is very difficult and even impossible while dealing with designs, which are not allowed to include holes in the represented space. This problem occurs when FFD is used for deforming systems, which are analyzed with computational calculation methods such as Computational Fluid Dynamics (CFD) or Finite Element Methods (FEM) to calculate specific features of the design. If e.g. CFD is applied, a computational grid has to be built according to the given geometry. If now a hole has to be introduced in the design, this hole has to be meshed and to be interfaced properly to the existing mesh to provide the grid for a CFD simulation. With standard FFD methods this is not possible without a remeshing procedure which is very time consuming.

As a consequence, changes in the design are desired which provide structural design changes without holes in the represented space.

Secondly, when FFD is applied the design is modified by moving control points and applying the new control point positions to update the design. A problem often occurs when control points have to be moved quite far to reflect a desired design change. This results in a control point set which is very ill-structured since many control points are quite close to each other. If control points are very close further design modifications are very difficult to achieve without having loops in the geometry. So a reorganisation of the representation, i.e. of the control points, is strongly desired in order to allow further design modifications.

### OBJECT OF THE INVENTION

It is therefore an object of the invention to devise an improved method and an improved system for manipulating a design. In particular, it is an object of the invention to devise an improved method and system for introducing structural changes in a design and/or for a reorganisation of the representation.

### SUMMARY OF THE INVENTION

This object is achieved by a method according to independent claim 1. Advantageous embodiments are defined in the dependent claims. The embodiments or examples of the following description which are not covered by the appended independent or dependent claims are to be considered as not being part of the present invention.

The method for modifying a free-form deformation representation of an object on a computer includes the representation comprising a free-form deformation geometry and a free-form deformation control volume. The method comprises steps of:
deforming the free-form deformation control volume;
selecting a first module of the object, wherein the first module comprises a part of the free-form deformation geometry and is situated in a first free-form deformation sub-control volume of the control volume;
choosing a second module from a database, wherein the second module comprises a second free-form deformation geometry; and
replacing the part of the free-form deformation geometry with the second free-form deformation geometry. The method is characterized by including
a step of replacing the deformed first sub-control volume by an undeformed second sub-control volume of the second free-form deformation geometry in the free-form deformation control volume, wherein the structure of the undeformed first sub-control volume and a structure of the second sub-control volume is the same.

The second module may further be chosen by minimizing a given distance measure between the first module and the second module. The method may further comprise the step of automatically adapting the second sub-control volume such that a given distance measure between the first module and the second module decreases. Moreover, the adaptation of the second sub-control volume may be achieved using an optimization algorithm.

The method may be used for the optimisation of a real-world object, represented by the design. The optimisation may optimise fluid dynamic objectives.

Free Style Deformation (FSD) introduces a modular concept for design modifications with FFD. A module is in this context defined as the geometry which is situated in an FFD sub-control volume. The combination of common FFD techniques and module exchanges promises to be an efficient and highly flexible representation for complex structures. A design is finally defined by a code specifying which sub-control-volumes have to be combined and by the deformations of each control point.

### SHORT DESCRIPTION OF THE FIGURES

These and other aspects, features and advantages of the present invention will become more evident when studying the following detailed description in connection with the annexed drawing in which
- Fig. 1: illustrates the basic idea of the free form deformation;
- Fig. 2: shows the Free Form Deformation of a sphere by direct manipulation;
- Fig. 3: shows an illustration of the spline mathematics;
- Fig. 4: shows an illustration of the preparation a cylinder;
- Fig. 5: illustrates the overall control volume;
- Fig. 6: shows a 4 x 4 x 4 sub-control volume A;
- Fig. 7: illustrates different kinds of geometry modules which have been frozen
- Fig. 8: shows a deformation of the geometries in Figures 3 and 4;
- Fig. 9: shows a flowchart illustrating the module exchange according to one embodiment of the invention;
- Fig. 10: shows a flowchart illustrating the module exchange according to another embodiment of the invention; and
- Fig. 11: shows a flowchart of a method for optimizing a design using free style deformation.

### DETAILED DESCRIPTION OF THE INVENTION

Since the general concepts of FFD have already been explained above, in the following only those features of this representation are addressed which allow the set up of a modular FFD framework.

One such feature relevant for exchanging modules is the underlying spline mathematics, which is important for the determination of the parameters in spline parameter space and the deformations.

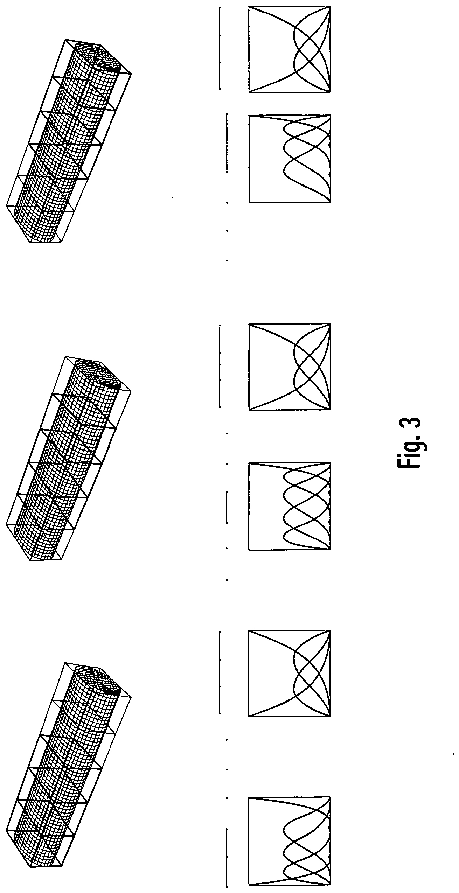

**Figure 3** shows an illustration of the spline mathematics. For a spline degree of 3, cubes consisting of 4 x 4 x 4 control points are responsible for the calculation of the geometry in spline parameter space. Each cube is responsible for a small part of the geometry.

For further explanations a spline degree of 3 is considered but the method can be applied to other spline degrees in the same way. The method is also not only valid for two dimensions but also for other dimensions. Additionally the method is explained for control volumes defined by B-Splines but the method can be extended to other spline types, e.g. H-Splines, T-Splines, etc.

Because of the B-splines a lattice of control points can be subdivided for a spline degree of 3 into smaller 4 x 4 squares (in three dimensions a 4 x 4 x 4 cubes), each one is responsible for the mathematics of a smaller part of the whole system. This 'local' feature allows perfectly the exchange of one (or more) of these squares (cubes) as long as the interfaces are kept. Since every sub-control-volume is responsible for the modifications of only a part of the geometry, an exchange of such a sub-volume would only affect the geometry within this sub control volume. The affected geometry is identified by the frozen s, t, u coordinates in spline parameter space which are assigned to the specified sub-control-volume.

The term "to keep the interfaces" is interpreted in two ways. Lets assign the module which is chosen to be exchanged the letter A and the module which is chosen for insertion the letter B:
On the one hand it is essential that the structure of the sub-control-volume of A and of B is identical, i.e. the number of control points and the knot vectors of A and B have to be identical. This statement is true for both, the usage of clamped and unclamped splines in the sub-control-volumes.

On the other hand the initial boundary coordinates of the part of the geometry which is assigned to A and of the geometry which is assigned to B should be the same to guarantee a smooth geometry transition. Since if a geometry has initially smooth transitions with both modules A and B it will also provide smoothness when these modules are exchanged and deformations are applied.

But whereas the first criterion is a requirement for the workability of the proposed framework, the second one is not obligatory but a suggestion to produce geometries which do not have any sudden cracks but keep smoothness.

In the proposed method, one (or more) of these squares (cubes) may be exchanged. Then, deformations on the new modules may be applied to achieve real structural flexibility.

This feature enables the designer to exchange one or more of these sub-control volumes and directly apply given deformations to the reconstructed design containing the new modules. The only constraint is that the local structure of the control volume is the same for all modules.

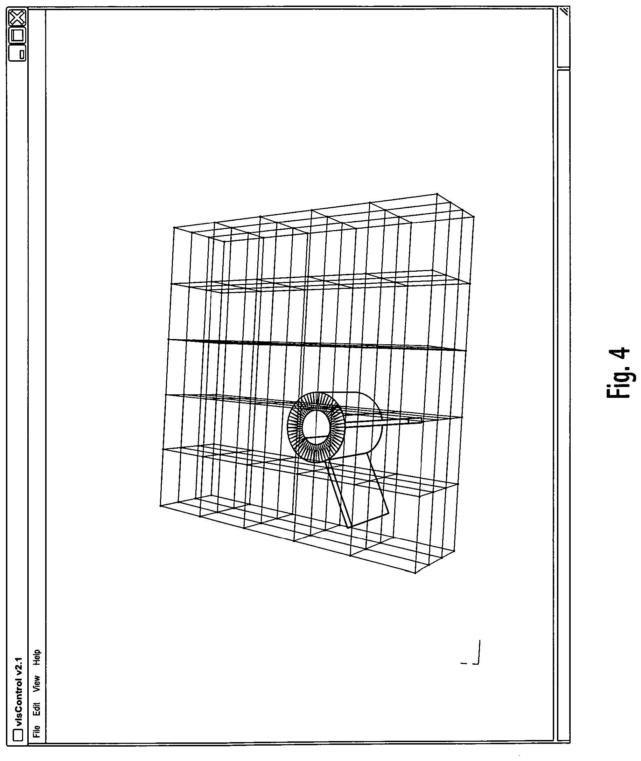

**Figure 4** shows an illustration of the preparation a cylinder. To achieve the module flexibility it is necessary to build the geometries and to calculate their coordinates in spline parameter space. So at first the whole geometry is embedded in the control volume which is adapted to the geometry. In the present case a 6 x 6 x 4 control volume is chosen for simplicity.

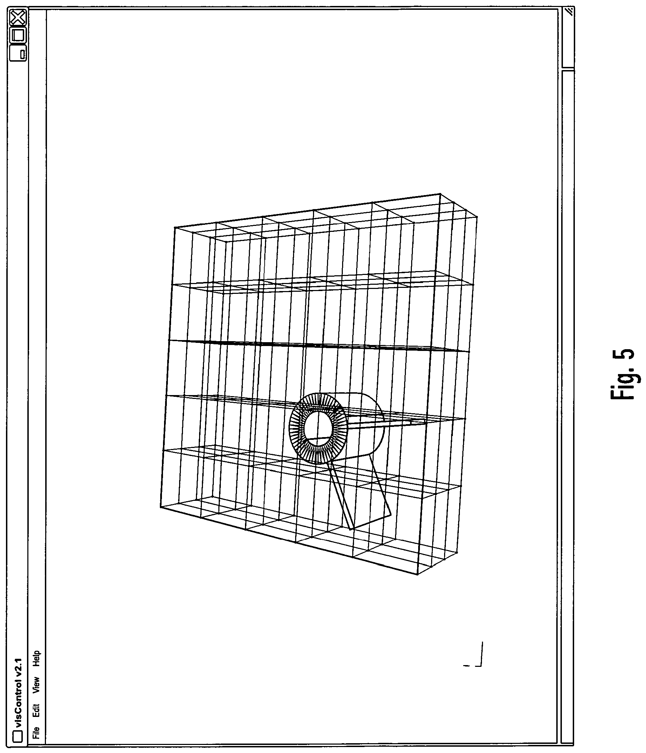

**Figure 5** illustrates the overall control volume. As described above during the freezing process sub-control volumes are considered, each one is responsible for a smaller part of the geometry.

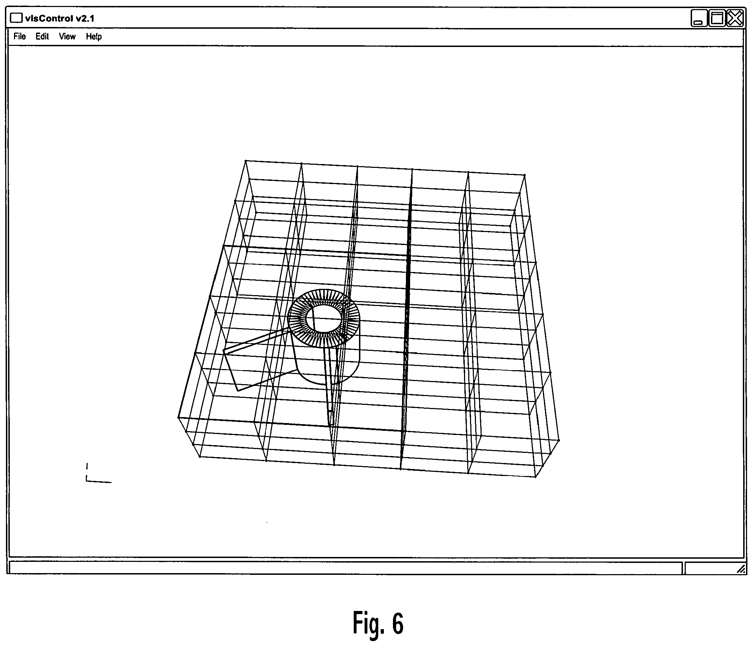

**Figure 6** shows a 4 x 4 x 4 sub-control volume A which will be responsible for the red marked region in spline parameter space, i.e. the red part of the geometry is assigned to the sub-control-volume A. The grey part is frozen by the other sub-control volumes. In this Figure, it can be seen that the blue marked sub-control volume is responsible for the red marked part of the geometry whereas the other sub-control volumes are responsible for the grey marked part of the geometry.

This preparation phase has to be done for all different modules which are possible to be exchanged to form new geometries during the design or optimisation process.

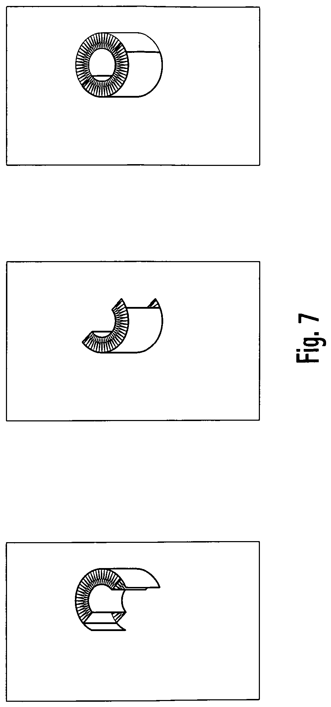

**Figure 7** illustrates different kinds of geometry modules which have been frozen in the same way as described above to the control volume. These modules can be combined with the "base" module (the initial upper part of the cylinder) to produce structurally different kinds of geometries.

In the same way as in the "normal" FFD control points may be modified and the deformation may be applied.

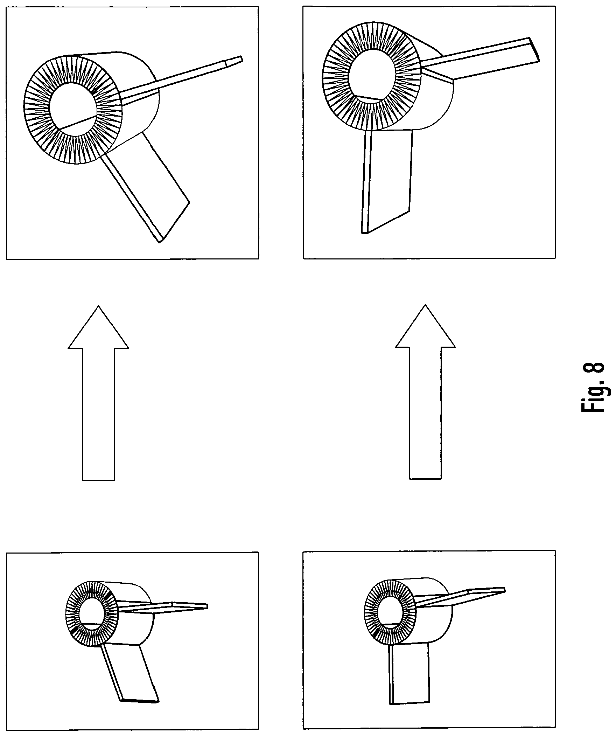

**Figure 8** shows a deformation of the geometries in Figures 3 and 4. After construction of the geometry by combining all sub-control volumes the geometries can be deformed by the same modifications on the control points. In the right picture the grey geometry is the initial one and the red one is the deformed one. In addition to this recombination effect the deformation takes place on the geometry.

In other words, the new proposed method considers both: module exchange and deformation for a high degree of shape flexibility.

An example framework for working with FSD can be described as follows: First, different geometries are frozen to a control volume and the sub-control-volumes respectively (Figures 4 to 6). In the next step an initial geometry is built from a set of modules as starting point. By a modification of the control points the geometry is deformed. At some point of time it can occur that a desired deformation can not be realized because of control points which are very densely distributed or the designer would like to realize a conceptual change. If further deformations shall be performed a module has to be exchanged.

This module exchange can be realized in different ways:
I. Selection of the modules A and B to be exchanged:
   - The modules may be chosen manually: The designer selects a module A or modules A which are about to be exchanged. Then he picks a module B which reflects his imagination of deformation and exchanges the modules.
   - The modules may be chosen with a computational method: Alternatively the designer can select a module A for replacement and let a computational algorithm decide which module B from a given database is the best choice for replacement. This algorithm can be based e.g. on shape similarity analysis, i.e. the algorithm tries to find a module B in the database which is the most similar to the current deformed one and suggests it for exchange.
II. Exchanging the modules and building the new assembly
   - Non-neutral exchange: After the modules A and B are determined, module A is exchanged with module B. Since the current control point positions are directly applied the geometry is deformed and because initial module B differed from initial module A the new geometry is different from the one before the module has been exchanged.
   - Neutral exchange: After the modules A and B are determined, module A is exchanged with module B. Since the current control point positions are directly applied the geometry is deformed and because initial module B differs from the initial module A the new geometry is different from the one before the module has been exchanged. To "repair" the design in such a way that the geometry after the exchange equals the one before exchange an optimisation can be performed. During this process the control point positions are optimized in such a way that the design using the module B is as close as possible to the design before the exchange using module A.

After the module exchange has taken place, the deformation process can be resumed.

The database of geometry modules itself can be extended at any time. So if an adequate geometry module is not within the database the part of the geometry which is about to be inserted is designed manually. After this process the design is embedded in the sub-control-volume and frozen to it. The big advantage of an existing database is that the mapping from coordinates in cartesian space to coordinates in parameter space is already done. Therefore the exchange process is very fast since no freezing has to be done.

Summarizing there are two main features which are achieved by using Free Style Deformation (FSD):
1. Creative Design: After modifying the initial design, two modules are exchanged which are chosen manually or by a computer software. When the new module is inserted, the already performed deformations are applied to the new module and the new shape is calculated. This design can now be kept for further deformations or the module can be exchanged again. It is worth to notice that there is no knowledge on how the new design will look like before exchange since the deformation take immediately place and modify the new module.
2. Reorganisation of the representation: By exchanging the module which evolved by control point modifications to a similar design which did not undergo any deformations so far, the representation is reorganized because the control points are better distributed. The interesting feature is that the designer does not need to care for the representation. A computational algorithm can select the adequate design and optimize the shape so that it fits as close as possible to the design before the exchange happened. This will result in a better distribution of control points which allows the designer more freedom on the design.

In both cases real structural changes can be achieved since the module exchange can also include the integration of holes or edges in the design.

The following Figures illustrate the module exchange process:

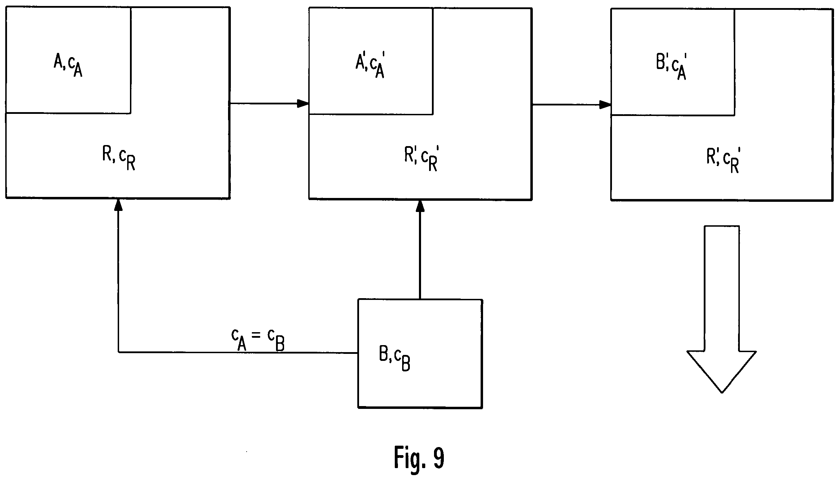

**Figure 9** shows a flowchart illustrating the module exchange according to one embodiment of the invention (Creative Design):
- A defines the module to be exchanged, c_{A} are the current control point positions assigned to module A;
- R defines the remaining geometry, c_{R} are the current control point positions assigned to the geometry R;
- ' - the symbol ' describes a modified design from its base design, i.e. A' is a modified design based on A, its control points are called c_{A}'

It is important to note that B' ≠B ≠A'.

The design built from A and R is deformed to A' and R', c_{A}' and c_{R}'. A module B is chosen for replacing A'. This design is inserted and the control point positions c_{A}' are applied which results in a deformed design B'.

Advantages of the described method are:
- creation of large variations - even a-priori unknown
- unchanged R' after module exchange
- c_{A}' are unchanged but search direction is different due to different B' ∩R'.
- This helps to escape local minima.

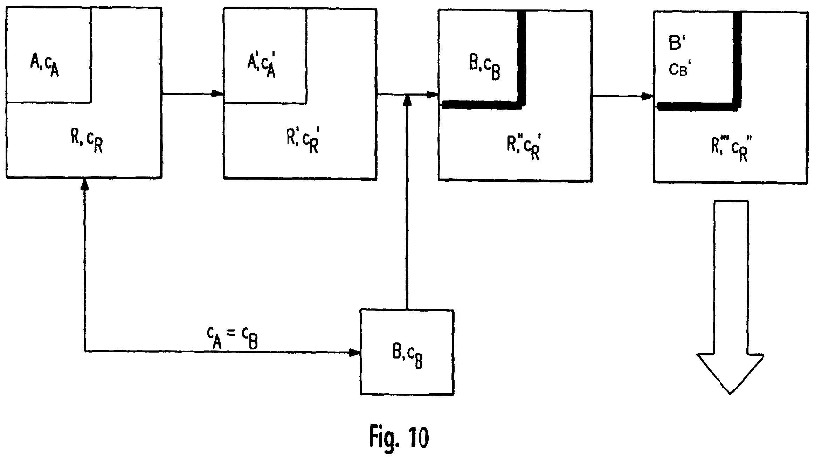

**Figure 10** shows a flowchart illustrating the module exchange according to another embodiment of the invention (Reorganizing the Representation).
- A defines the module to be exchanged, c_{A} are the current control point positions assigned to module A
- R defines the remaining geometry, c_{R} are the current control point positions assigned to the geometry R
- '- the symbol ' describes a modified design from its base design, i.e. A' is a modified design based on A, its control points are called c_{A}', analogue A" is a modified design based on A'

The design built from A and R is deformed to A' and R', c_{A}' and c_{R}'. A module B is chosen for replacing A'. This design is inserted and the control point positions c_{B} are applied which results in an non-deformed design B, but a different remaining geometry R" since some control points of the module B may have an influence on R'. Next a matching may be applied. On the one hand to achieve a neutral insertion the control points can be optimized in such a way that the geometry built from B ∩ R" is as close as possible to A' ∩ R'. This will result in a geometry B' ∩ R'" defined by the optimized control point positions c_{B}' and c_{R}". On the other hand the matching process can be driven by only a partial match so that the geometry defined in A' is a part of the geometry defined in B.

The advantages of the described method are:
- c_{B}' are better organised as c_{A}' and allow more flexibility on the design
- This helps to escape local minima when FSD is applied in optimisations
- This helps to open up new directions for manual creative design
- if the matching is applied B' ∩ R'" are close to A' ∩ R' but the control points are better distributed

In a further embodiment, the proposed method of Free Style Deformation may be extended by the methods of direct manipulation. The only difference is in the handles. In a standard FSD framework the deformation is applied via the control points. In a direct manipulation framework the deformation are done by modifying object points. These object points can be predefined on each geometry module or they can be defined after a module exchange has taken place. Since the control points are updated by some kind of computational algorithm the distribution and choice of object points depends solely on the designer.

In summary, Free Style Deformation is a very flexible representation which combines the features of a standard Free Form Deformation and the concept of modular geometries. The advantages are the efficient modelling of deformations of a geometry instead of the geometry itself which is especially important for complex designs as well as allowing conceptual and structural design changes by the exchange of sub-control-volumes.

In a further embodiment of the invention, the techniques of Free Style Deformation (FSD) may be combined with an optimizer to solve design optimisation problems in engineering, e.g. in the construction of a turbine wing or an aircraft.

When combining standard FSD with optimisation some important steps have to be processed. At first the initial design which is optimized has to be represented by FSD. So an adequate control volume has to be set up in which the geometry is embedded. Additionally, all modules which will be available for the optimisation have to be embedded in the FSD control volume and their coordinates have to be transferred to the parameter space. All modules will be collected in a database.

As optimisation parameters two information have to be managed, a unique tag which defines which modules are currently active, i.e. which modules build the design, and the deformations of the control points.

During optimisation both parameters are varied, so the tag for the active module combination can change as well as the deformations. There are several kinds of optimisation algorithms available which can be used for optimisation, one of them is an evolutionary algorithm.

Using evolutionary algorithms the deformations and the tag for the active modules are encoded in the chromosome of the initial parent. There are a lot of possibilities to perform the optimisation. E.g., the parent can be reproduced and slightly modified according to the chosen strategy. On the one hand the deformations can be varied and on the other hand the tag for the active modules can be changed. Alternatively, one can at first calculate several generations only modifying the deformations of the control points and then perform a module change. This allows at first to optimize the geometry based only on deformations to globally adapt the geometry. To tune the geometry module exchanges can increase the performance because a new module can be closer to the optimum and the control points are reorganized so that more flexibility is achieved. There are a lot of different ways to provide a proper module, e.g., the choice can be done based on a shape analysis. By a shape analysis the current geometry is compared to geometries which can be built from the existing modules. The geometry which matches the current geometry best can be chosen as active for the further optimisation. Usually this results in a better organized control volume.

But there are a lot of ways to choose the new module and for this choice an intelligent strategy is required. There are two extremes: One could choose the closest shape suggested by the shape similarity analysis to provide a smooth fitness transition after the new modules are activated. As a disadvantage the possibility exists to get stuck in a local optimum. Alternatively one could choose a more dissimilar module which leads to a step in the fitness curve but can overcome a local optimum.

A possible solution is to apply the concept of subpopulations which assists in the choice of a proper module but keeps the disadvantage of a high usage of computational power.

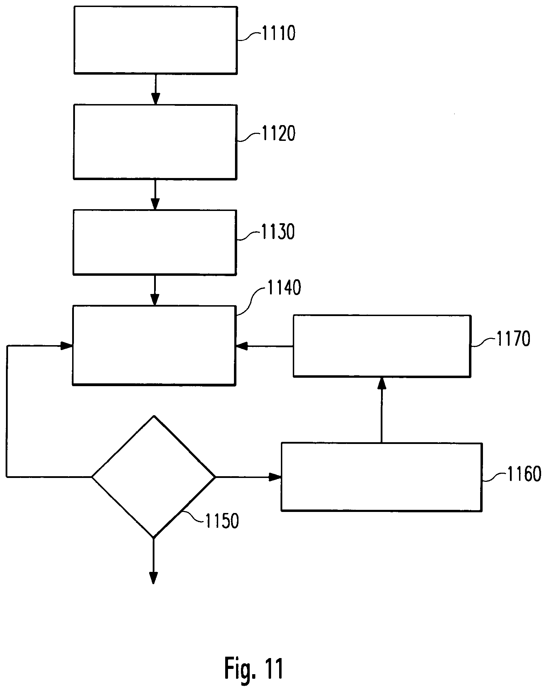

**Figure 11** shows a flowchart of a method for optimizing a design using free style deformation.

In step 1110, the geometry is embedded in an adequate control volume and the sub-control volumes are determined.

In step 1120, the modular geometries are embedded in the sub-control volumes and a shape database is built up. Alternatively, an already present shape database may be used.

In step 1130, the tags for active modules and the control points are encoded.

In step 1140, the control points are optimized according to a given fitness function for a given number of steps. The optimisation may comprise the substeps of varying the control points, calculating the deformed geometry and evaluating its performance.

In step 1150, it is determined whether an intermediate step for exchanging a module should be effected or not, e.g. when the fitness function tends to a non-desirable value. If this is not the case, step 1140 is repeated.

In other words, the main optimisation loop (steps 1130 to 1150) comprises the following steps:
1. Encoding of the geometry in the chromosome of the initial parent, i.e. the tag for the active module and the deformations are stored
2. Reproduction of the parent to get a number of offsprings
3. Mutation of the deformations of the offsprings
4. Construct the geometry from the module tag and apply the deformations given in the chromosomes of the offsprings to generate the current design
5. Evaluation of all designs
6. Selection of the best design according to the given fitness
7. Repeat steps 2. to 6. until a module exchange is intended

If a module exchange is intended, then the method continues with step 1160 by performing a shape similarity analysis. Then the module is exchanged according to the above-described methods in step 1170.

In other words, the intermediate step for the module exchange may comprise the following steps:
1. Perform a shape similarity analysis between the current best design and geometries which can be built from the module database.
2. Calculation of a probability for each geometry according to the shape similarity results for each design
3. Choice of a number of proper design candidates according to their probabilities

In one embodiment of the invention, Target Matching, i.e. an optimisation according to the steps 1130 to 1150 with the new geometry encoded in the chromosome of the initial parent may be effected. The fitness is determined by a minimization of the difference between the shape built from the new modules and the current best shape which resulted in step 1150 If this optimisation is performed the step in the fitness curve is minimized. This intermediate optimisation step optimizes each of the proper design candidates according to the steps 1130 to 1150 with the new geometries encoded in the chromosome and the global fitness equation for several generations.

Having carried out step 1170, the method branches to step 1140. Here, the best candidate is chosen and activated for the main optimisation. The whole loop may be terminated by a given criterion.

Additionally it may be noted that it is also possible to integrate new modules during optimisation. E.g., if the optimizer suggests large deformations and no module exists which is close to the deformed geometry, the designer can construct this module and integrate it in the database easily.

The combination of FSD with optimisation has the advantage that the FFD representation provides a good trade-off between the number of parameters and flexibility. This good combination is extended by the concept of exchanging modules which allows a reorganisation of the representation during optimisation and real structural changes in the design.

FSD is especially useful when working with CFD or other computational methods which need a computational grid for design evaluation. Because if FFD is applied the optimisation is limited by the choice of the initial design, since structural changes are not possible to be realized. So e.g. the introduction of a hole in the design is difficult to realize because a new CFD mesh has to be constructed in the hole and carefully connected to the existing mesh. FSD relies on predefined modules which already have a mesh and are well interfaced. This allows a fast exchange of modules.

## Claims

1. A method for modifying a free-form deformation representation of an object on a computer, the representation comprising a free-form deformation geometry and a free-form deformation control volume, the method comprising the steps of:
deforming the free-form deformation control volume;
selecting a first module of the object, wherein the first module comprises a part of the free-form deformation geometry and is situated in a first free-form deformation sub-control volume of the control volume;
choosing a second module from a database, wherein the second module comprises a second free-form deformation geometry;
replacing the part of the free-form deformation geometry with the second free-form deformation geometry, and
**characterized in**
including a step of replacing the deformed first sub-control volume by an undeformed second sub-control volume of the second free-form deformation geometry in the free-form deformation control volume,
wherein the structure of the undeformed first and second sub-control volumes is the same.

2. The method according to claim 1,
wherein the second module is chosen by minimizing a given distance measure between the first module and the second module.

3. The method according to claim 1, further comprising the step of
automatically adapting the second sub-control volume such that a given distance measure between the first module and the second module decreases.

4. The method according to claim 3,
wherein the adaptation of the second sub-control volume is achieved using an optimisation algorithm.

5. Method according to claim 4, wherein the method optimises a real-world object.

6. The method according to claim 5,
wherein the real-world object is optimised in a fluid-dynamic optimisation.

## Patentansprüche

1. Verfahren zum Modifizieren einer Freiform-Deformationsdarstellung eines Objekts auf einem Computer, wobei die Darstellung eine Freiform-Deformationsgeometrie und ein Freiform-Deformationskontrollvolumen umfasst, wobei das Verfahren die folgenden Schritte umfasst:
Verformen des Freiform-Deformationskontrollvolumens;
Auswählen eines ersten Moduls des Objekts, wobei das erste Modul einen Teil der Freiform-Deformationsgeometrie umfasst und sich in einem ersten Freiform-Deformationsunterkontrollvolumen des Kontrollvolumens befindet;
Auswählen eines zweiten Moduls aus einer Datenbank, wobei das zweite Modul eine zweite Freiform-Deformationsgeometrie umfasst;
Ersetzen des Teils der Freiform-Deformationsgeometrie durch die zweite Freiform-Deformationsgeometrie und
**dadurch gekennzeichnet, dass**
es einen Schritt des Ersetzens des verformten ersten Teilkontrollvolumens durch ein unverformtes, zweites Teilkontrollvolumen der zweiten Freiform-Deformationsgeometrie im Freiform-Deformationskontrollvolumen umfasst,
wobei die Struktur des unverformten ersten und zweiten Teilkontrollvolumens gleich ist.

2. Verfahren nach Anspruch 1,
wobei das zweite Modul durch Minimieren eines gegebenen Abstandsmaßes zwischen dem ersten Modul und dem zweiten Modul ausgewählt wird.

3. Verfahren nach Anspruch 1, ferner umfassend den Schritt des automatisches Anpassens des zweiten Subkontrollvolumens, so dass ein gegebenes Abstandsmaß zwischen dem ersten Modul und dem zweiten Modul abnimmt.

4. Verfahren nach Anspruch 3,
wobei die Anpassung des zweiten Teilkontrollvolumens unter Verwendung eines Optimierungsalgorithmus erreicht wird.

5. Verfahren nach Anspruch 4, wobei das Verfahren ein reales Objekt optimiert.

6. Verfahren nach Anspruch 5,
wobei das reale Objekt in einer strömungsdynamischen Optimierung optimiert wird.

## Revendications

1. Procédé de modification d'une représentation en déformation de forme libre d'un objet sur un ordinateur, la représentation comprenant une géométrie en déformation de forme libre et un volume de contrôle en déformation de forme libre, le procédé comprenant les étapes de :
déformation du volume de contrôle en déformation de forme libre ;
sélection d'un premier module de l'objet, dans lequel le premier module comprend une partie de la géométrie en déformation de forme libre et est situé dans un premier sous-volume de contrôle en déformation de forme libre du volume de contrôle ;
choix d'un deuxième module auprès d'une base de données, dans lequel le deuxième module comprend une deuxième géométrie en déformation de forme libre ;
remplacement de la partie de la géométrie en déformation de forme libre par la deuxième géométrie en déformation de forme libre, et
**caractérisé par**
l'inclusion d'une étape de remplacement du premier sous-volume de contrôle déformé par un deuxième sous-volume de contrôle non déformé de la deuxième géométrie en déformation de forme libre dans le volume de contrôle en déformation de forme libre,
dans lequel la structure des premier et deuxième sous-volumes de contrôle non déformés est la même.

2. Procédé selon la revendication 1,
dans lequel le deuxième module est choisi en minimisant une mesure de distance donnée entre le premier module et le deuxième module.

3. Procédé selon la revendication 1, comprenant en outre l'étape de
adaptation automatique du deuxième sous-volume de contrôle de telle sorte qu'une mesure de distance donnée entre le premier module et le deuxième module diminue.

4. Procédé selon la revendication 3,
dans lequel l'adaptation du deuxième sous-volume de contrôle est accomplie à l'aide d'un algorithme d'optimisation.

5. Procédé selon la revendication 4, dans lequel le procédé optimise un objet du monde réel.

6. Procédé selon la revendication 5,
dans lequel l'objet du monde réel est optimisé dans une optimisation de dynamique des fluides.
